# EUROPEAN PATENT APPLICATION

(11) **EP 4 614 775 A1**
(43) Date of publication of application: **10.09.2025**
(21) Application number: 24162434.5
(22) Date of filing: 08.03.2024
(51) Int. Cl.: H02K 3/38, H02K 11/042, H02K 19/38, H02K 3/50, H02K 15/00, H01F 38/18

(54) **AN ELECTRICALLY EXCITED ROTOR**

(71) Applicant: Polestar Performance AB, 405 31 Gothenburg (SE)
(72) Inventor: RODÉN, Marcus, 432 96 Åskloster (SE); EHN, Joakim, 461 98 Trollhättan (SE); HÅKANSSON, Emil, 416 74 Göteborg (SE); ÅBERG, Magnus, 461 91 Trollhättan (SE); GUSTAFSSON, Tomas, 417 02 Göteborg (SE)
(74) Representative: Zacco Sweden AB

(57) **Abstract**

The present disclosure relates to an electrically excited rotor (1) comprising an annular rotor core (2) comprising a circumferentially distributed winding arrangement (10). Further, the rotor (1) comprises an end plate (20) attached to a base (2a) of said rotor core (2), a transformer device (30) comprising a rotary part (31) and a static part (32), the static part (32) being configured to contactless transfer AC power to the rotary part (31). Further, the rotor (1) comprises a rectifier board (40) connected to said rotary part (31), wherein the rectifier board (40) is attached to a first surface (20a) of said end-plate (20).

## Description

### TECHNICAL FIELD

The present disclosure relates to an electrically excited rotor and a method for manufacturing a rotor.

### BACKGROUND

Electric vehicles (EV) are becoming increasingly popular as consumers look to decrease their environmental impact and improve air quality.

In an electric vehicle the rotor and stator are key components of the electric motor that drives the vehicle's wheels. The rotor is the rotating part of the motor, typically made of a series of electromagnets and soft iron laminations. The stator is the stationary part of the motor, typically consisting of a windings wound around a core. The rotor and stator work together to convert electrical energy stored in the EV's battery into mechanical energy to drive the vehicle, making them critical components of the EV powertrain.

Permanent magnets used in rotors are not considered environmentally friendly for several reasons. First, the production of permanent magnets involves mining and refining of rare earth elements, which can cause environmental degradation and pollution. Also, permanent magnets can pose challenges in recycling and disposal, as they contain hazardous materials that can potentially harm the environment if not handled properly. Therefore, while permanent magnets have many technological benefits, their production and use can have negative environmental implications that need to be carefully managed.

Based on the above, electrically excited rotors using windings around the rotor core are considered to be more environmental friendly compared to permanent magnet rotors. However, the use of an electrically excited rotor requires a plurality of electric components such as a transformer and a rectifier board for enabling power to be transmitted to the windings of the rotor.

Conventional electrically excited rotors comprise such electric components attached in a manner which increases the size of the rotor and/or manufacturing/assembling complexity of the rotor.

Therefore, even though electrically excited rotors of the present art may work well in some situations. There is a need for an electrically excited rotor that has its electric components attached thereto in a manner that reduces manufacturing complexity and/or increases a compactness.

### SUMMARY

It is therefore an object of the present disclosure to alleviate at least some of the mentioned drawbacks to provide a rotor that is improved in compactness and/or manufacturing convenience. Further, the disclosure provides a method for assembling an electrically excited rotor.

The present disclosure relates to an electrically excited rotor (hereinafter referred to as a "rotor") comprising an annular rotor core comprising a circumferentially distributed winding arrangement and an end plate attached to a base of said rotor core. The rotor core may be a laminated rotor core. Further, the rotor comprises a rotor shaft accommodated by said rotor core such that the rotor shaft rotates with the rotor core. Moreover, the rotor comprises a transformer device comprising a rotary part and a static part, the static part being configured to contactless transfer AC power to the rotary part. Accordingly, the static part may receive AC power from a power source which is contactless transmitted to the rotary part. Further, the rotor comprises a rectifier board connected to said rotary part by e.g. wires/busbars. The rectifier board may be configured to rectify said AC power to DC power so to power said winding arrangement with said DC power. Furthermore, the rectifier board is attached to/fixed to a first surface of said end-plate.

An advantage of the rotor of the present disclosure is that the fixing of the rectifier board to the end-plate enables an easier manufacturing of the rotor as the rectifier board will be assembled to the rotor simultaneously as the end-plate is mounted to the rotor. Accordingly, the rectifier board may be pre-attached to the first surface of the end-plate.

The rotary part may be attached to an opposite second surface of said end-plate. Accordingly, the rectifier board and the rotary part may be attached to opposite surfaces of the end-plate.

Advantageously, this allows the end-plate to act as a support structure and heat sink for two parts, i.e. the rectifier board and the rotary part.

The first surface may be directed to/facing a base of said rotor core and winding arrangement. Accordingly, the second surface may face away from said base of said rotor core.

An advantage of this is that the rectifier board with components attached thereto may be in vicinity of the winding arrangement which enables a more secure electric connection between the rectifier board and the winding arrangement. Moreover, this enables electromagnetic shielding (via the end-plate) of the winding arrangement relative to the rotary part. In some aspects, the rectifier board may have a circular or semi-circular shape such that it at least partly encircles the rotor shaft. This may allow the rectifier board to be more conveniently connected to e.g. diametrically opposite parts of the winding arrangement.

The winding arrangement may be in electrical contact with said rectifier board via a winding attachment interface, the winding attachment interface comprising at least one rectifier contact and at least one winding contact. The rectifier contact may be attached to a connector interface portion at said rectifier board and said at least one winding contact is attached to said winding arrangement so to enable the rectifier board to supply the winding arrangement with DC power.

The rectifier contact may be arranged to be attached to a connector interface portion at said rectifier board. The winding contact may be arranged to attach to a part of the winding arrangement, e.g. an end part of a pair of conductors of the winding arrangement. The rectifier contact may be inserted into a terminal/socket at said connector interface portion at said rectifier board. Preferably, the rectifier contact is a pair of rectifier contacts, one for a positive terminal in said rectifier board and one for a negative terminal in said rectifier board.

The winding attachment interface may be in the form of a ring like structure which may have a pair of rectifier contacts and at least one winding contact extending from the ring-like structure. It should be noted that the winding attachment interface is not limited to a ring like structure.

An advantage of having such a winding attachment interface is that the winding attachment interface enables a more rapid and secure electrical connection to be established between the rectifier and the winding arrangement. Further, the winding attachment interface enables any winding arrangement (irrespective of how many conductors said winding arrangement comprises) to be coupled to the rectifier board conveniently as the winding attachment interface may comprise a corresponding number of winding contacts as the number of conductor end parts.

The rectifier board may be an insulated metal base printed rectifier board (IMS) rectifier board, wherein said end-plate is a metal base of said IMS rectifier board.

Advantageously, the end-plate may form a structural and thermally distributing part of said rectifier board.

The IMS rectifier board may further comprises a dielectric film on top of said metal base, a circuit layer on top of said dielectric film, switching and control components attached to said circuit layer. The circuit layer may be a substrate having conductive traces. Accordingly, the switching and control components may be arranged to be attached to said conductive traces to establish said rectifier board allowing it to rectify AC power to DC power. The switching and control components may comprise one or more of filtering components, rectifier diodes, thyristors, transistors, and any other suitable component. In some aspects the dielectric film may be any type of dielectric layer. Nonetheless, a dielectric film provides a thin structure and is therefore preferred.

The rotary part may be circumferentially enclosed by an axially protruding lip of said end-plate, or, the rotary part circumferentially encloses said axially protruding lip. The lip may be a circumferential lip that is coaxial with the rotor shaft/rotor core. The rotary part may be attached to said second surface of said end-plate at said lip. The term "lip" may be interchanged with "end-plate flange".

The static part is attached to a stationary frame such as an electric motor housing, the rotor being arranged to rotate relative said stationary frame, wherein the static part is arranged to allow said contactless transfer of AC power. The stationary frame may comprise an axially protruding rim, the static part circumferentially enclosing an outer surface of said rim or is circumferentially enclosed by said rim. The term "rim" may be interchanged with "stationary housing flange".

The aforementioned rim and lip may be arranged correspondingly, such that if the rotary part circumferentially encloses the lip, the rim circumferentially encloses the static part. Accordingly, the static part may circumferentially enclose the rotary part to enable inductive transfer of AC power therebetween. In such an aspect, the rotary part at least partially extends into a space within the rim.

In another aspect, if the rotary part is circumferentially enclosed by the lip, the static part circumferentially encloses the rim. Accordingly, the rotary part circumferentially encloses the static part to enable inductive transfer of AC power therebetween. In such an aspect, the static part at least partially extends into a space within the lip.

Advantageously, the static part and the rotary part may be inductively coupled in a compact yet structural rigid manner.

As the rotary part may be integrated to said second surface of said end-plate and the static part can be integrated to the stationary frame, the transformer device may be end-of-line (EOL) tested prior to assembly to the rotor core. This enables potential early fault detection and performance assessment of the transformer device prior to final rotor assembly.

The end-plate may comprise a radially extending cooling channel arranged to transfer cooling medium. The cooling channel may transfer cooling medium from an interior of the rotor shaft via said radial cooling channel and out from a circumferential surface of the end-plate. The cooling channel may be situated and extend between the first and second surface thereof.

At least a part of the rectifier board (such as switching and control components thereof) may extend into said cooling channel and/or a heatsink connected to said rectifier board extends into said cooling channel.

Advantageously, the rectifier board may be directly cooled by cooling medium (such as oil) flowing through the cooling channel. Hence, as the cooling channel may be situated between the first and the second surface of the end-plate, the cooling channel may be operable to cool at least parts of the transformer, the rectifier board, the end-plate and the rotor shaft.

In some aspects, the end plate may comprise a plurality of such radially extending cooling channels distributed about a perimeter associated with a circumference of the rotor shaft.

The rotary part of the transformer device may also extend into said cooling channel. Accordingly, the rotary part which may be attached to said second surface may penetrate said second surface so to extend into the cooling channel. Thereby, the cooling medium flowing through the cooling channel may directly cool the rotary part. Specifically, a core material of the rotary part (formed by e.g. ferrite) may extend into said cooling channel.

In some aspects herein, the end-plate may comprise potting openings dimensioned to enable potting material to be inserted into a space formed between the end-plate and the base of the rotor core. This allows for potting to be inserted after the rotor is assembled. Accordingly, the rectifier board will also be potted into said space.

The present disclosure further relates to a method for assembling an electrically excited rotor comprising the steps of:
- providing an annular rotor core comprising a circumferentially distributed winding arrangement, wherein the rotor core accommodates a rotor shaft;
- providing an end-plate having a rectifier board pre-assembled to a first surface of said end-plate;
- attaching, preferably by press-fit, said end-plate to a base of said annular rotor core.

In some aspects, the first surface of said end-plate may is arranged to be directed towards said base of said rotor core, then the rotor core comprises a winding attachment interface comprising a rectifier contact and at least one winding contact attached to said winding arrangement, wherein the rectifier board comprises a connector interface portion, wherein the rectifier contact is dimensioned relative to the end-plate to be inserted in the connector interface portion during the step of attaching said end-plate to said base.

The end-plate may further comprise a pre-assembled rotary part attached to an opposite second surface of said end-plate. In such an aspect, the method may also comprise the step of, prior to attaching, perform the step of EOL testing at least the rotary part and the rectifier board. EOL testing may comprise to assess the performance and function of the rotary part and the rectifier board to ensure that they function in accordance with requirements. In some aspects, a static part may be provided to perform said EOL testing.

The present disclosure further relates to an electric motor comprising the rotor according to any aspect herein. The electric motor may be an electrically excited synchronous motor. The electric motor, may as appreciated, comprise a stator accommodating the rotor such that the rotor rotates relative to the stator.

The present disclosure further relates to an electric vehicle comprising the aforementioned electric motor.

### BRIEF DESCRIPTION OF THE DRAWINGS

These and other features and advantages of the present disclosure will now be further clarified and described in more detail, with reference to the appended drawings;
- Figure 1: illustrates an axial cross-section of a rotor 1 from an objective view in accordance with some aspects of the present disclosure;
- Figure 2: illustrates an axial cross-section of a rotor 1 from a side-view in accordance with some aspects of the present disclosure;
- Figure 3: illustrates an axial cross-section of a rotor 1 from a side-view in accordance with some aspects of the present disclosure;
- Figure 4: illustrates an axial cross section of a part of a rotor 1 from a side-view in accordance with some aspects of the present disclosure;
- Figure 5: illustrates an axial cross section of a part of a rotor 1 from a side-view where an enlarged portion of the transformer 30 is illustrated;
- Figure 6: illustrates an objective view of a schematically illustrated rotor 1 in accordance with some aspects of the present disclosure;
- Figure 7: illustrates illustrates an objective view of a winding attachment interface 41 in accordance with some aspects of the present disclosure;
- Figure 8A: illustrates schematically a method 100 for assembling an electrically excited rotor in accordance with some aspects of the present disclosure; and
- Figure 8B: illustrates schematically a side-view of an electric vehicle 300 comprising an electric motor 200 in accordance with some aspects of the present disclosure.

### DETAILED DESCRIPTION

In the following detailed description, some embodiments of the present disclosure will be described. However, it is to be understood that features of the different embodiments are exchangeable between the embodiments and may be combined in different ways, unless anything else is specifically indicated. Even though in the following description, numerous specific details are set forth to provide a more thorough understanding of the present disclosure, it will be apparent to one skilled in the art that the present disclosure may be practiced without these specific details. In other instances, well known constructions or functions are not described in detail, so as not to obscure the present disclosure.

It is also to be understood that the terminology used herein is for purpose of describing particular aspects only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative. More specifically, the wording "one or more" of a set of elements (as in "one or more of A, Band C" or "at least one of A, B and C") is to be interpreted as either a conjunctive or disjunctive logic. Put differently, it may refer either to all elements, one element or combination of two or more elements of a set of elements. For example, the wording "A, B and C" may be interpreted as A or B or C, A and B and C, A and B, B and C, or A and C.

It will also be understood that, although the term first, second, etc. may be used herein to describe various elements or features, these elements should not be limited by these terms. These terms are only used to distinguish one element from another. For example, a first element could be termed a second element, and, similarly, a second element could be termed a first element, without departing from the scope of the embodiments. The first element and the second element are both elements, but they are not the same element.

The term "electric vehicle" as used herein may refer to an all-electric vehicle, also referred to as an EV. Further, the term "electric vehicle" may refer to a plug-in hybrid vehicle, also referred to as a PHEV. Further, the term "electric vehicle" may refer to a hybrid vehicle, also referred to as a HEV, where a hybrid vehicle refers to a vehicle utilizing multiple propulsion sources one of which is an electric drive system.

The term "electrically excited rotor" may refer to a rotor which comprises a winding arrangement arranged to receive DC power.

The term "radially" may refer to a direction perpendicularly outward from a central point or axial axis, specifically a central axis of a circular structure. For instance, if a line is drawn from a center of a circle to its circumference or from its circumference outwards, those lines may be considered as extending radially.

The term "axially" may refer to a direction along or parallel to an axial axis or central line. Specifically, parallel to or along a central line or axis of a circular structure.

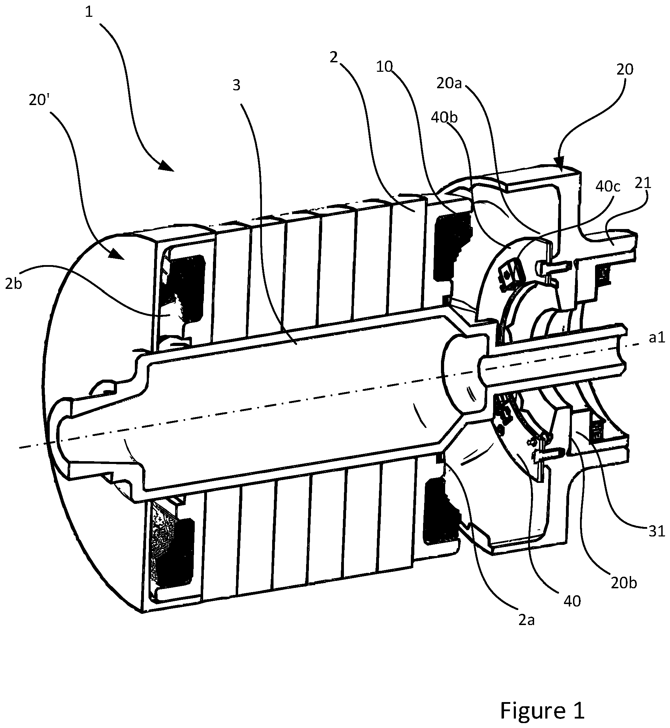

Figure 1 illustrates an axial cross-section of a rotor 1 from an objective view, wherein the end-plate 20 is separated from the core 2. Figure 1 illustrates that the rotor 1 comprises an annular rotor core 2 comprising a circumferentially distributed winding arrangement 10. The winding arrangement 10 is wound axially about poles (not denoted) of the rotor core 2. The rotor core 2 may comprise a plurality of poles.

Further, the rotor 1 comprises an end-plate 20 attached to a base 2a of said rotor core 2. As illustrated, the rotor 1 may further comprise another end-plate 20' at an opposite base 2b of said rotor core 2. The end-plates 20, 20' may be dimensioned to cover said bases 2a, 2b. The end-plates may be attached by fastening means and/or by press-fit to said rotor core 2. The term "end-plate" may be interchanged with "balance shield".

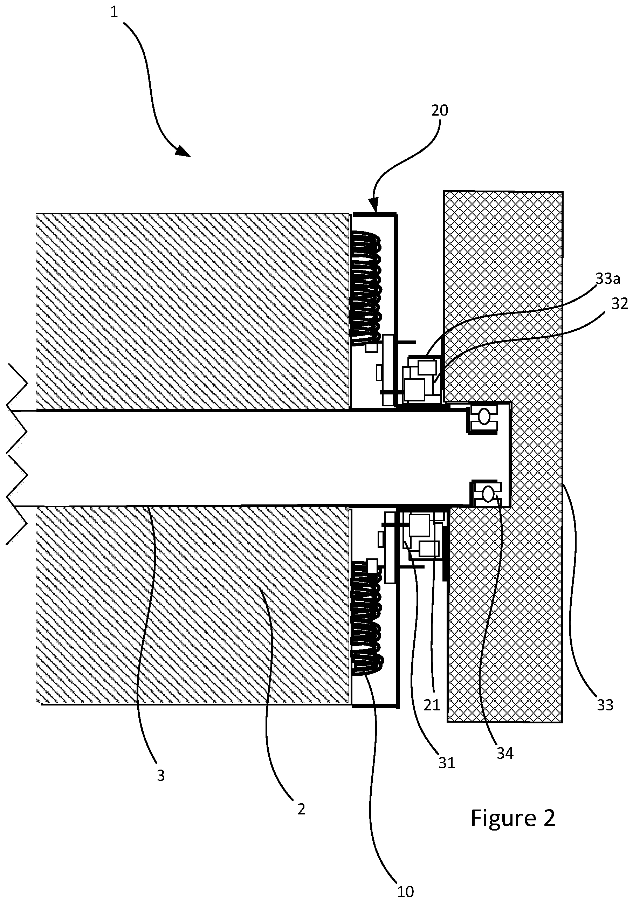

Moreover, Figure 1 illustrates that the rotor 1 comprises a rotor shaft 3 accommodated by said rotor core 2. The rotor shaft 3 in Figure 1 is a hollow rotor shaft. Nonetheless, the rotor shaft 3 herein is not limited to a hollow rotor shaft. Figure 1 further illustrates that the rotor 1 comprises a transformer device comprising a rotary part 31 and a static part 32 (not shown in Figure 1, see Figure 2), the static part 32 being configured to contactless, preferably by induction, transfer alternating current (AC) power to the rotary part 31. The static part 32 may receive AC power from an inverter via a power source such as a battery pack. Moreover, the rotor 1 comprises a rectifier board 40 connected to said rotary part 31 by e.g. busbars. The rectifier board 40 is attached to a first surface 20a of said end-plate 20. In Figure 1, the first surface 20a is an inner surface of the end-plate which faces the base 2a of the rotor core 2. The rectifier board 40 may comprise switching and control components 40c configured to rectify the AC power received from the rotary part 31 to direct current (DC) power. The rectifier board 40 may further be configured to transmit, by e.g. busbars, said DC power to the winding arrangement 10 of the rotor 1 to enable the winding arrangement to produce a magnetic field which is to interact with a stator, thereby enabling the rotor 1 to rotate with respect to the stator.

As further illustrated in Figure 1, the end-plate 20 may comprise an opening such that an end portion of the rotor shaft 3 can protrude out from said opening. The end portion of the rotor shaft 3 may be dimensioned to correspond to the dimensions of the opening.

It should be noted that the end-plate 20 may be formed by any suitable material such as any suitable metal.

The rectifier board 40 of Figure 1 is attached to the end-plate 40 by fastening means. However, in some aspects the rectifier board 40 is an insulated metal base printed rectifier board (IMS) rectifier board. Accordingly, the end-plate 20 is then a metal base of said IMS rectifier board. In other words, the end-plate is integrated/integral with said rectifier board and forms a structural part thereof. Accordingly, such an IMS rectifier board 40 further comprises a dielectric film (not shown) on top of said metal base and a circuit layer 40b on top of said dielectric film. The dielectric film may have a thickness of e.g. 1µm to 400µm, preferably 50-150 µm. The circuit layer 40b may in some aspects be an etched copper layer laminated to the dielectric film, the etched copper layer having circuit traces to enable said rectifier to rectify said AC power to DC power. The copper layer may be a copper foil. Moreover, as illustrated in Figure 1, the rectifier board 40 comprises switching and control components 40c attached to the circuit layer 40c. The term "switching and control components" may be interchanged with surface mount devices (SMD).

Figure 1 further illustrates that the end-plate 20 may comprise an axially protruding lip 21 protruding along an axial axis a1 of the rotor 1. The lip 21 in Figure 1 protrudes from a second surface 20b. Figure 1 further illustrates that the rotary part 31 may be circumferentially enclosed by the axially protruding lip 21 of said end-plate 20. The lip 21 may as in Figure 1 be a circular lip, hence, the rotary part 31 may conform to the circular shape of the lip 21. The rotary part 31 may be press-fitted to the lip 21. The lip 21 may fully circumferentially enclose the rotary part 31 as illustrated in Figure 1, so to support the rotary part 31.

Figure 1 further illustrates that the rectifier board 40 is on an opposite side of the end-plate relative to the rotary part 31 such that a normal axis from the rectifier board 40 (which is perpendicular to surface 20a) would intersect the rotary part 31. The rectifier board 40 may be connected to said rotary part 31 by busbars extending through the thickness of the end-plate. Generally, the rotary part 31 and the static part 32 may each comprise a core in the form of e.g. ferrite. Further, each part 31, 32 may comprise a corresponding coil structure.

Figure 2 illustrates an axial cross-section of the rotor 1 from a side-view according to some aspects of the present disclosure. Figure 2 also illustrates the static part 32 which is configured to contactless transfer AC power to the rotary part 31. As illustrated in Figure 2, the static part 32 may be attached to a frame 33. Accordingly, the frame 33 and the static part 32 may be stationary so that the frame 33 does not rotate with the rotor 1. The frame 33 may be attached to the rotor 1 by bearings 34 so to enable the rotor 1 to rotate relative to the frame 33.

Further, Figure 2 illustrates an aspect in which the rotary part 31 circumferentially encloses/encircles said axially protruding lip 21. Figure 2 further illustrates that the stationary frame 33 comprises an axially protruding rim 33a, the static part 32 being circumferentially enclosed by said rim 33a.

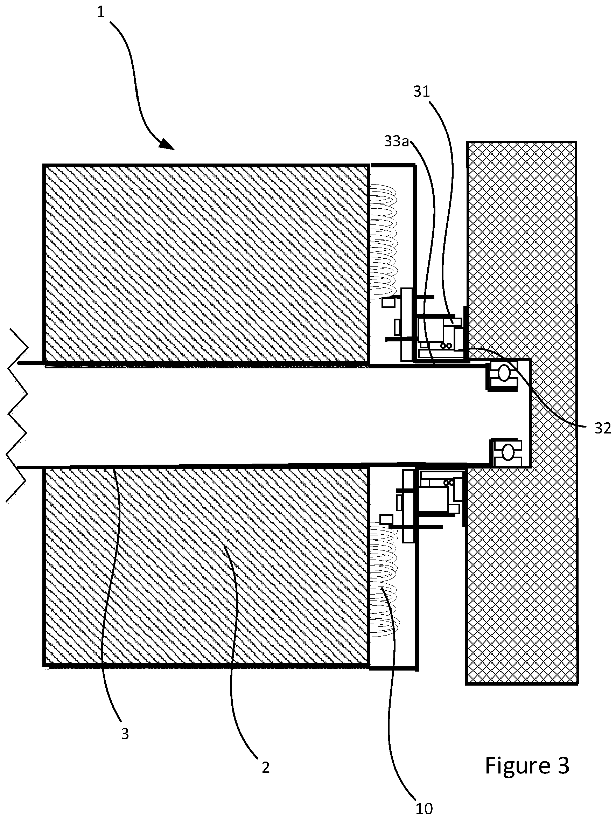

Figure 3 illustrates an axial cross-section of the rotor 1 from a side-view according to some aspects of the present disclosure. In Figure 3, contrary to Figure 2, rotary part 31 is circumferentially enclosed by an axially protruding lip 21 of said end-plate 20. Further, the static part 32 circumferentially enclosing/encircles said rim 33a. However, in any aspect of Figure 2 and 3, the rim 33a and the lip 21 may define a space in-between each other, said space being arranged to secure the rotary part and the static part 31, 32 for enabling the rotary part to inductively receive AC power from the static part 31, 32. Figures 2-3 further clearly illustrate the end-plate 20 covering part of the winding arrangement 10 (also referred to as winding overhang) protruding from the base of the rotor core 2.

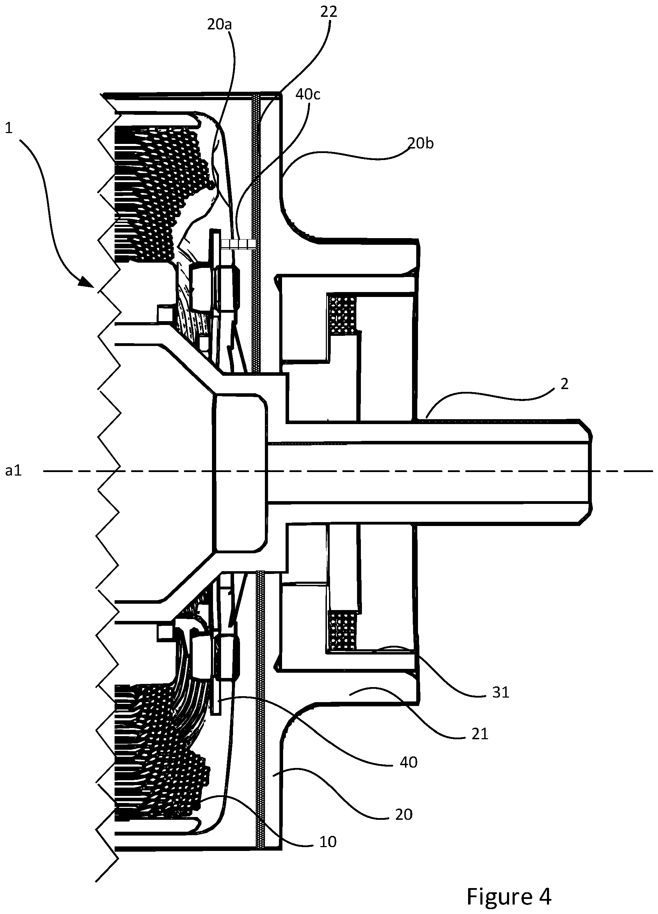

Figure 4 illustrates an axial cross section of a part of a rotor 1 from a side-view. Figure 4 illustrates that the end-plate 20 may comprise at least one radially extending cooling channel 22 arranged to transfer cooling medium, wherein at least a part of the rectifier board 40 extends into one at least one of said at least one cooling channels 22. In Figure 4 a switching and control component 40c extends into the channel 22 so that any cooling medium flowing through the channel directly contacts the switching and control component 40c. However, in some aspects, any other part of the rectifier board 40 such as a heatsink connected thereto may extend into said cooling channel 22. Further, in some aspects, no component extend into the cooling channel 22. The cooling channel 22 may be arranged to receive cooling medium from the rotor shaft 3. Accordingly, the hollow rotor shaft 3 of Figure 4 may comprise a cooling nozzle (not shown) which is arranged to receive cooling medium (such as oil) from a cooling source and eject the cooling medium out from the rotor shaft 3 into the at least one cooling channel 22 of the end-plate 22. The cooling medium may flow radially within the end-plate to be ejected out from the rotor 1. The cooling channels 22 may be embedded in the end-plate 20 between the surfaces 20a, 20b.

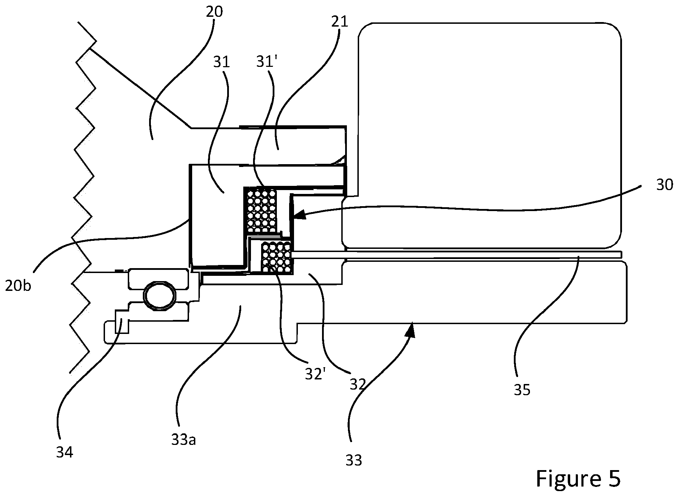

Figure 5 illustrates an axial cross section of a part of a rotor 1 from a side-view where an enlarged portion of the transformer 30 is illustrated. Figure 5 illustrates that a space defined between the lip 21 and the rim 33a may be arranged to receive the transformer device 30. Further Figure 5 illustrates that the static part 32 may have electrical connections/cables routed through the frame 33. Moreover, Figure 5 illustrates that each of the static part 32 and the rotary part 31 may comprise a coil structure 31' 32'. Figure 5 further illustrates that an inner surface of the lip 21 and the second surface 20b of the end-plate 20 may support the rotary part 31. Accordingly, the second surface 20b may support the rotary part 31 axially and the lip 21 may support the rotary part radially 21. In any aspect herein, the second surface 20b and the lip 21 may support the rotary part 31. Figure 5 further illustrates that the lip 21 may encircle the rim 33a.

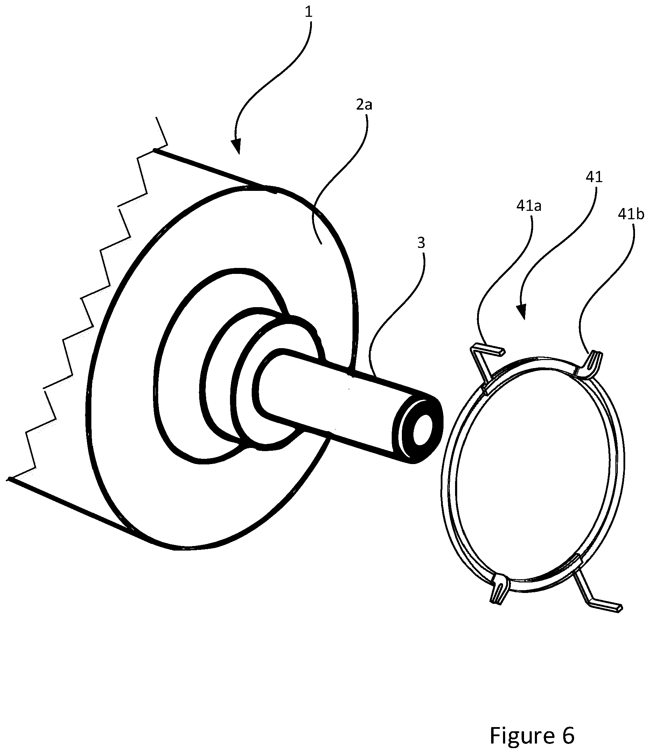

Figure 6 illustrates an objective view of a schematically illustrated rotor 1. Figure 6 illustrates that the rotor 1 may comprise a winding attachment interface 41 which may be in the form of a ring for being inserted over the rotor shaft 3. The winding attachment interface 41 may be arranged to be received by a track in the rotor base 2a so that it is secured in the rotor base 2a. Further, Figure 6 illustrates that the winding attachment interface 41 may comprise a rectifier contact 41a and at least one winding contact 41b. The rectifier contact 41a may be a stiff/rigid busbar dimensioned to be plugged in into a socket within the rectifier board 40. The socket may be at a connector interface portion at said rectifier board 40. Further, the at least one winding contact 41b may be arranged to be attached to said winding arrangement 10 so to enable the rectifier board to supply the winding arrangement 10 with DC power.

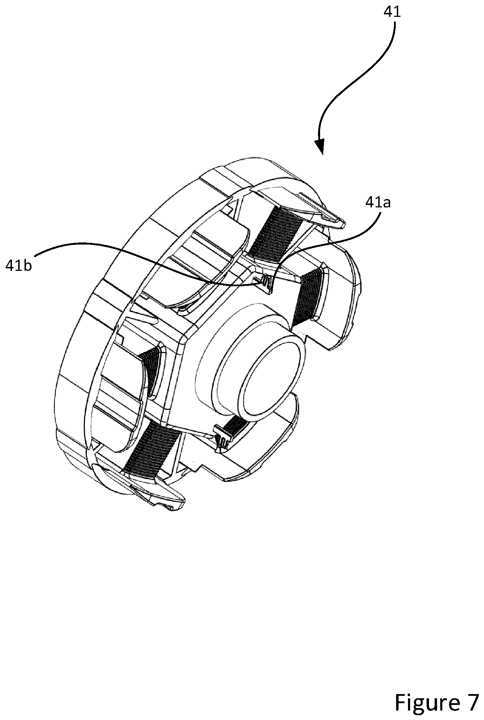

Figure 7 illustrates an objective view of an aspect of a winding attachment interface 41 in which the winding attachment interface 41 is integral with a rotor winding support structure which is arranged to be attached to a base of the rotor core. Further, in Figure 7, corresponding rectifier contact 41a and winding contacts 41b form a common part such that the rectifier contact 41a protrudes from the winding contact 41b.

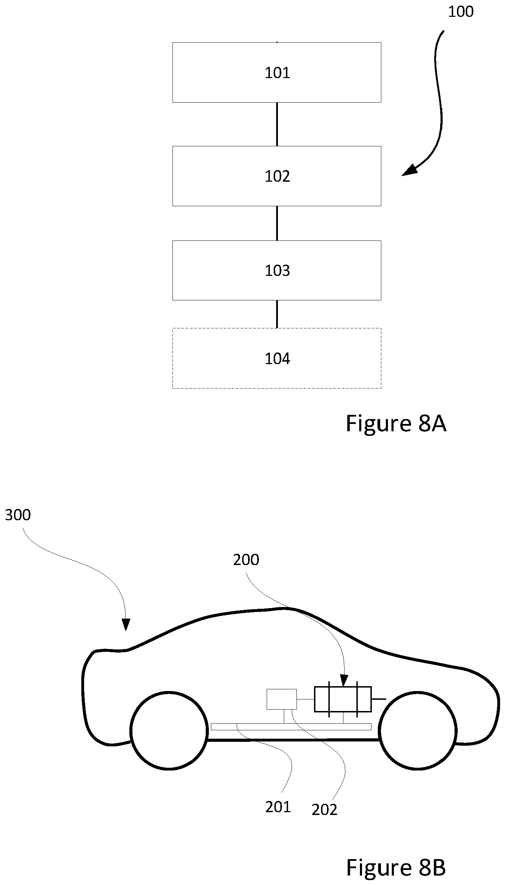

Figure 8A illustrates schematically a method 100 for assembling/manufacturing an electrically excited rotor comprising the steps of:
- providing 101 an annular rotor core comprising a circumferentially distributed winding arrangement, wherein the rotor core accommodates a rotor shaft. The rotor core may be the rotor core of any aspect of the present disclosure.
- providing 102 an end-plate having a rectifier board pre-assembled to a first surface of said end-plate. The end-plate may be the end-plate of any aspect of the present disclosure.
- attaching 103, preferably by press-fit, said end-plate to a base of said annular rotor core. The end-plate may be the end-plate of any aspect of the present disclosure.

In some aspects, as illustrated in Figure 8A, the end-plate may comprise a pre-assembled rotary part (of a transformer device) attached to an opposite second surface of said end-plate. Thereby, the rectifier board and the rotary part may be pre-assembled to the end plate at opposite sides of the end-plate.

The method 100 may further comprise the step of attaching 104 a stationary frame to said rotor. The stationary frame may be attached by bearings so that the rotor is rotatable relative to the stationary frame. A static part may be fixedly attached to the stationary frame. The static part and the rotary part may jointly define said transformer device.

Figure 8B illustrates schematically a side-view of an electric vehicle 300 comprising an electric motor 200 which comprises the rotor 1 according to any aspect of the present disclosure. The electric motor 200 may therefore also comprise a stator accommodating the rotor. The electric vehicle 300 may, as illustrated in Figure 8B, further comprise any suitable components and circuitry as appreciated by a skilled person in the art. For example, the vehicle 300 may comprise a battery pack 201 comprising a plurality of battery cells grouped into battery modules. Further, the vehicle 300 may comprise an inverter 202. The transformer 30 herein may receive said AC power from the battery pack 201 via the inverter 202 or in any other suitable manner.

## Claims

1. An electrically excited rotor (1) comprising:
- an annular rotor core (2) comprising a circumferentially distributed winding arrangement (10);
- an end plate (20) attached to a base (2a) of said rotor core (2);
- a rotor shaft (3) accommodated by said rotor core (2);
- a transformer device (30) comprising a rotary part (31) and a static part (32), the static part (32) being configured to contactless transfer AC power to the rotary part (31);
- a rectifier board (40) connected to said rotary part (31);
wherein the rectifier board (40) is attached to a first surface (20a) of said end-plate (20).

2. The rotor (1) according to claim 1, wherein the rotary part (31) is attached to an opposite second surface (20b) of said end-plate (20).

3. The rotor (1) according to claim 1 or 2, wherein the first surface (20a) of said end-plate (20) is directed towards said base (2a) of said rotor core (2).

4. The rotor (1) according to any one of the preceding claims, wherein the winding arrangement (10) is in electrical contact with said rectifier board (40) via a winding attachment interface (41),
the winding attachment interface (41) comprising a rectifier contact (41a) and at least one winding contact (41b),
wherein the rectifier contact (41a) is inserted into a connector interface portion at said rectifier board (40) and said at least one winding contact (41b) is attached to said winding arrangement (10) so to enable the rectifier board to supply the winding arrangement (10) with DC power.

5. The rotor (1) according to any one of the preceding claims, wherein rectifier board (40) is an insulated metal base printed rectifier board, IMS rectifier board, wherein said end-plate (20) is a metal base of said IMS rectifier board.

6. The rotor (1) according to claim 5, wherein the IMS rectifier board (40) further comprises:
- a dielectric film on top of said metal base;
- a circuit layer (40b) on top of said dielectric film;
- switching and control components (40c) attached to said circuit layer (40c).

7. The rotor (1) according to any one of the preceding claims, wherein the rotary part (31) is circumferentially enclosed by an axially protruding lip (21) of said end-plate (20), or circumferentially encloses said axially protruding lip (21).

8. The rotor according to any one of the preceding claims, wherein the static part (32) is attached to a stationary frame (33), the rotor (1) being arranged to rotate relative to said stationary frame (33), wherein the static part (32) is arranged to allow said contactless transfer of AC power.

9. The rotor (1) according to claim 8, wherein the stationary frame (33) comprises an axially protruding rim (33a), the static part (32) circumferentially enclosing said rim (33a) or is circumferentially enclosed by said rim (33a).

10. The rotor (1) according to any one of the preceding claims, wherein the end-plate (20) comprises a radially extending cooling channel (22) arranged to transfer cooling medium, wherein at least a part of the rectifier board (40) extends into said cooling channel (22) and/or a heatsink connected to said rectifier board extends into said cooling channel, the cooling channel (22) being arranged to receive cooling medium from said rotor shaft (3).

11. A method (100) for assembling an electrically excited rotor comprising the steps of:
- providing (101) an annular rotor core comprising a circumferentially distributed winding arrangement, wherein the rotor core accommodates a rotor shaft;
- providing (102) an end-plate having a rectifier board pre-assembled to a first surface of said end-plate;
- attaching (103), preferably by press-fit, said end-plate to a base of said annular rotor core.

12. The method (100) according to claim 11, wherein the first surface of said end-plate is arranged to be directed towards said base of said rotor core,
wherein the rotor core comprises a winding attachment interface comprising a rectifier contact and at least one winding contact attached to said winding arrangement, wherein the rectifier board comprises a connector interface portion, wherein the rectifier contact is dimensioned relative the end-plate to be inserted in the connector interface portion during the step of attaching said end-plate to said base.

13. The method (100) according to any one of the claims 11 or 12, wherein the end-plate further comprises a pre-assembled rotary part attached to an opposite second surface of said end-plate.

14. An electric motor (200) comprising the rotor according to any one of the claims 1-10.

15. An electric vehicle (300) comprising the electric motor (200) according to claim 14.
